# EUROPÄISCHE PATENTSCHRIFT

(11) **EP 3 324 157 B1**
(45) Veröffentlichungstag und Bekanntmachung des Hinweises auf die Patenterteilung: **11.12.2019**
(21) Anmeldenummer: 17198560.9
(22) Anmeldetag: 26.10.2017
(51) Int. Cl.: G01F 11/00, G01F 11/18, G01F 11/24, A47J 31/40

(54) **VORRICHTUNG ZUM DOSIEREN EINES LEBENSMITTELPULVERS**
DEVICE FOR METERING OUT A FOOD POWDER
DISPOSITIF DE DOSAGE D'UNE POUDRE ALIMENTAIRE

(30) Priorität: 07.11.2016 DE 102016121263
(43) Veröffentlichungstag der Anmeldung: 23.05.2018
(73) Patentinhaber: emkon Systemtechnik, Projektmanagement GmbH, 27308 Kirchlinteln (DE)
(72) Erfinder: DITTRICH, Andreas, 27308 Kirchlinteln (DE); HILGER, Jens, 27299 Langwedel (DE)
(74) Vertreter: Jabbusch, Matthias

(56) Entgegenhaltungen:
- WO-A1-02/064006
- WO-A1-2014/168853
- US-A1- 2010 320 225
- US-A1- 2011 030 846

## Beschreibung

Die Erfindung betrifft eine Vorrichtung zum Dosieren eines in Vorratspackungen abgepackten Lebensmittelpulvers, insbesondere eines Milchpulvers für Babynahrung, mit wenigstens einer Portioniereinrichtung, wobei die Portioniereinrichtung eine Standbodenbeutelhalterung mit wenigstens einer darunter ausgebildeten Pulvereintrittsöffnung und wenigstens einer versetzt zu der Pulvereintrittsöffnung gelegenen Pulveraustrittsöffnung aufweist, und dass die Portioniereinrichtung ein Stellglied mit wenigstens einer zwischen der Pulvereintrittsöffnung und der Pulveraustrittsöffnung stellbeweglich gehaltenen Pulverdosierkammer aufweist, und die Portioniereinrichtung ein Ständerwerk aufweist, in welchem die Standbodenbeutelhalterung auf einer Horizontalachse klappbeweglich gehalten ist.

Bekannt sind sogenannte Vollautomaten, in denen gekapselte oder tablettierte Pulverportionen eingelegt, und die Kapseln oder Tabletten in automatisierten Arbeitsabläufen in temperiertem Wasser gelöst und als verzehrfertiges Nahrungsmittel bereitgestellt werden. Die Vorteile der Vollautomaten liegen in einer schnellen und hygienischen Zubereitung der Lebensmittel. Jedoch besteht neben den für solche Vollautomaten bei Anschaffung anfallenden hohen Investitionskosten ein weiterer Kostenfaktor in vergleichsweise hohen Betriebskosten, bedingt dadurch, dass man an speziell für den Vollautomaten entwickelte Kapsel- oder Tablettenformate gebunden ist.

Aus der US-amerikanischen Anmeldeschrift US 2010/0320225 A1 ist eine Kaffeedosiervorrichtung bekannt, die einen Vorratsbeutel für gemahlenen Kaffee sowie einen Dosierblock umfasst. Dieser weist einen zwischen einer Eingangs- und einer Ausgangsöffnung in einer Gleitführung motorisch angetriebenen Schieber mit einer Dosierkammer auf. Der Anschluss des Vorratsbeutels erfolgt über einen Kupplungsmechanismus mit einer an der Ausgangsöffnung des Dosierblockes ausgebildeten Kupplungshälfte und einer an einer Öffnung des Vorratsbeutels ausgebildeten Kupplungshälfte. Außerdem zeigt diese Druckschrift ein Ausführungsbeispiel, bei dem der Vorratsbeutel für gemahlenen Kaffee gegen eine Teebox für Teeblätter ersetzt ist. Ein zwischen Teebox und Dosierblock ausgebildeter Schwenkmechanismus dient einem verbesserten Materialfluss der Teeblätter in den Dosierblock hinein.

Die internationale Anmeldeschrift WO 2014/168853 A1 beschreibt einen Schüttgutspender zum Abgeben von Schüttgut aus einem Vorratsbeutel heraus. Dieser Schüttgutspender hat einen Ständer mit einer Schüttguthalterung zur Aufnahme des Vorratsbeutels und eine mit der Schüttguthalterung verbundene Spendereinrichtung. Um den Schüttguthalter wahlweise in eine Ladeposition zum Einsetzen und Wechseln eines Vorratsbehälters oder in eine Abgabeposition zum Abgeben von Schüttgut bewegen zu können, ist der Schüttgutträger schwenkbeweglich im Ständer aufgehängt.

Weitere Schüttgutspender sind aus der internationalen Anmeldeschrift WO 02/064006 A1 und aus der US-amerikanischen Anmeldeschrift US 2011/0030846 A1 bekannt.

Eine Alternative besteht darin, das Lebensmittelpulver in größeren Vorratspackungen abzufüllen und es diesen dann mittels eines Messbechers portionsweise zu entnehmen. Insbesondere beim Entleeren der Messbecher über Zubereitungsbehältnissen mit temperiertem Wasser kommt es jedoch durch abwechselnden Kontakt mit Wasserdampf und Lebensmittelpulver zu Anhaftungen an den Messbechern, und dann zu einer Rückverschleppung feuchter Pulverteilchen in die Vorratspackungen hinein und dort schließlich zu Pulververklumpungen. Damit besteht durch den manuellen Einsatz von Messbechern ein erhöhtes Risiko, dass Keime und Krankheitserreger in die Vorratspackungen hinein eingeschleppt werden und sich diese dort durch den Feuchtigkeitseintrag unkontrolliert vermehren können.

Der Erfindung liegt deshalb die Aufgabe zugrunde, eine Vorrichtung der eingangsgenannten Gattung aufzuzeigen, mit der ein einfaches und gleichwohl sauberes Dosieren von in Vorratspackungen abgepackten Lebensmittelpulvern möglich ist.

Diese Aufgabe ist durch die Merkmale des Patentanspruches 1 gelöst. Vorteilhafte Weiterbildungen der Erfindung sind in den Unteransprüchen beschrieben.

Der Umfang der Erfindung wird durch die Ansprüche definiert.

Die erfindungsgemäße Vorrichtung zeichnet sich dadurch aus, dass die Pulvereintrittsöffnung in einer der Kupplungshälften einer ihr zugeordneten Beutelanschlusskupplung ausgebildet ist, dass die jeweils anderen Kupplungshälften der Beutelanschlusskupplung in den Standböden eingebaut sind, und dass die Standbodenbeutelhalterung eine über der Pulvereintrittsöffnung angeordnete Beutelaufhängung aufweist. Die Beutelanschlusskupplung gewährleistet eine leckagefreie Überleitung des Lebensmittelpulvers aus einem Standbodenbeutel heraus in die Pulvereintrittsöffnung der Portioniereinrichtung hinein. Die jeweils andere in den Standbodenbeutel eingebrachte Kupplungshälfte ist somit ausdrücklich Bestandteil der erfindungsgemäßen Vorrichtung. Somit wird an dieser Stelle ebenfalls Schutz für einen Standbodenbeutel beansprucht, in dessen Folienmaterial eine Kupplungshälfte eingebracht ist, die zum Anschluss an die Kupplungshälfte der erfindungsgemäßen Vorrichtung geeignet ist und mit der Kupplungshälfte der erfindungsgemäßen Vorrichtung zusammenwirkende Anschlussstrukturen aufweist.

Die in den Standböden angebrachte Kupplungshälfte weist ein ihrer Durchtrittsöffnung zugeordnetes Verschlusselement auf, mit welchem der abfüllerseitig verschlossene Standbodenbeutel für seinen Anschluss an die Portioniereinrichtung geöffnet werden kann. Das Verschlusselement ist beispielsweise ein Schraubverschluss oder eine Reißlasche.

Mit der Horizontalachse kann die Beutelanschlusskupplung bei auf den Kopf gestelltem Standbodenbeutel geschlossen werden, so dass der Schließvorgang nicht dadurch behindert wird, dass Nahrungsmittelpulver an den Kupplungsflächen der Beutelanschlusskupplung ansteht. Mit der klappbeweglichen Standbodenbeutelhalterung kann die Beutelanschlusskupplung leckagefrei geschlossen werden.

Die Beutelaufhängung gewährleistet eine vollständige und vor allem störungsfreie Entleerung der Standbodenbeutel über die Portioniereinrichtung und verhindert vorteilhaft ein Abklappen oder Umknicken des den Standbodenbeutel ausbildenden Folienmaterials. Im einfachsten Fall ist die Beutelaufhängung ein Haken, der zur Aufnahme der Standbodenbeutel an sogenannten Eurolöchern dient, die regelmäßig in die Siegelnähte bekannter Standbodenbeutel eingestanzt sind. Es liegt jedoch im Rahmen der Erfindung, die Standbodenbeutelhalterung mit einer Klammer auszubilden, die zum Festklemmen der Standbodenbeutel an ihren oberen Siegelnähten geeignet sind.

Die Anordnung der Pulvereintrittsöffnung unterhalb der Standbodenbeutelhalterung erfordert die Ausbildung einer im Standbodenbeutel angeordneten Auslassöffnung, über welche das Lebensmittelpulver aus den Standbeuteln heraus abfließen kann. Für diese Fließbewegung nutzt die Erfindung die auf das Lebensmittelpulver wirkende Schwerkraft. Auf ein wiederholtes Eintauchen von Messbechern oder dergleichen in das in den Standbodenbeuteln bevorratete Lebensmittelpulver kann mit Vorteil verzichtet werden. Mit dem zwischen Pulvereintrittsöffnung und Pulveraustrittsöffnung verfahrenden Stellglied ist zudem ein unmittelbarer Kontakt des in den Standbodenbeuteln bevorrateten Lebensmittelpulvers mit der freien Atmosphäre verhindert, so dass insbesondere auch verhindert ist, dass aus einem Zubereitungsbehältnisses aufsteigender Wasserdampf das in einem Standbodenbeutel bevorratete Nahrungsmittelpulver befeuchtet. Mit der Merkmalskombination aus Standbodenbeutelhalterung und Stellglied ist insbesondere erreicht, dass mit aus Zubereitungsbehältnissen aufsteigendem Wasserdampf in Kontakt tretende Bauteile nicht in das in einem Standbodenbeutel bevorratete Nahrungsmittelpulver eingeführt werden zu brauchen. Ein besonders einfaches und gleichwohl sauberes Dosieren des Lebensmittelpulvers ist schließlich über eine automatische Betätigung des Stellgliedes, beispielsweise per Knopfdruck, oder eine manuelle Betätigung des Stellgliedes, beispielsweise per Handhebel, möglich.

Nach einer ersten Weiterbildung der Erfindung ist das Stellglied ein translatorisch geführter Schieber, wobei die Pulvereintrittsöffnung und die Pulveraustrittsöffnung in einem das Stellglied aufnehmenden Schiebegehäuse ausgebildet sind. Es liegt jedoch im Rahmen der Erfindung, das Stellglied als rotatorisch geführten Radkörper auszubilden.

Nach einer besonders vorteilhaften Weiterbildung der Erfindung weist die Portioniereinrichtung einen zwischen der Pulveraustrittsöffnung und einer Behälteraufnahme herausnehmbar angeordneten Trichter auf. Mit dem Trichter werden die Pulveraustrittsöffnung sowie die über das Stellglied an die Pulveraustrittsöffnung heranführbare Pulverdosierkammer vor einem Eintritt von aufsteigendem Wasserdampf geschützt. Für einen maximal großen Schutz weist der Trichterhals einen möglichst kleinen Durchmesser auf. Mit der Wahl des Trichterhalsdurchmessers sollte jedoch eine ausreichende Betriebssicherheit bezüglich eines störungsfreien Abfließens der zum Einsatz gelangenden Lebensmittelpulver durch den Trichterhals hindurch gewährleistet sein.

Ein Ausführungsbeispiel, aus dem sich weitere erfinderische Merkmale ergeben, ist in den Zeichnungen dargestellt. Es zeigen:
- Figur 1:: eine perspektivische Darstellung der erfindungsgemäßen Vorrichtung in einer Arbeitsstellung, und
- Figur 2:: eine perspektivische Darstellung der Vorrichtung gemäß Figur 1, jedoch in einer Ladestellung.

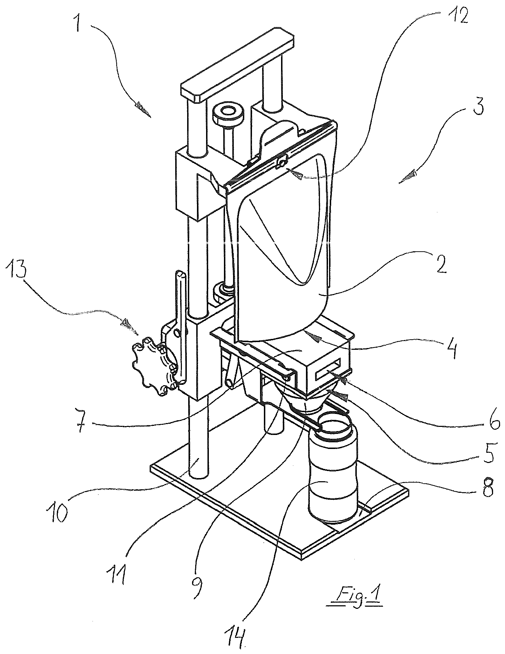

Die Figur 1 zeigt eine erste perspektivische Ansicht einer erfindungsgemäßen Vorrichtung in einer Arbeitsstellung mit einer Portioniereinrichtung 1 zum Dosieren eines Milchpulvers, welches in einem Standbodenbeutel 2 bevorratet ist. Die Portioniereinrichtung 1 weist zum einen eine Standbodenbeutelhalterung 3 mit einer darunter ausgebildeten Pulvereintrittsöffnung 4 (in der Figur nur verdeckt dargestellt) und einer versetzt zu der Pulvereintrittsöffnung 4 gelegenen Pulveraustrittsöffnung 5 auf. Außerdem weist die Portioniereinrichtung 1 ein Stellglied 6 mit einer zwischen der Pulvereintrittsöffnung 4 und der Pulveraustrittsöffnung 5 stellbeweglich gehaltenen Pulverdosierkammer auf. Das Stellglied 6 ist als translatorisch in einem Schiebergehäuse 7 geführter Schieber ausgebildet. Zusätzlich weist die Portioniereinrichtung 1 einen zwischen der Pulveraustrittsöffnung 5 und einer Behälteraufnahme 8 herausnehmbar angeordneten Trichter 9 auf. Gehalten wird die Portioniereinrichtung 1 in einem Ständerwerk 10, in welchem die Standbodenbeutelhalterung 3 mitsamt des Stellgliedes 6 auf einer Horizontalchse 11 klappbeweglich gehalten ist. Die Standbodenbeutelhalterung 3 weist eine über der Pulvereintrittsöffnung 4 angeordnete Beutelaufhängung 12 in Form eines beim Standbodenbeutel 2 in ein Euroloch eingreifenden Hakens auf. Eine am Ständerwerk 10 zwischen der Behälteraufnahme 8 und dem Trichter 9 ausgebildete handbetätigbare Höhenverstellung 13 ermöglicht die Aufnahme unterschiedlicher Zubereitungsbehälter 14 in der Behälteraufnahme 8.

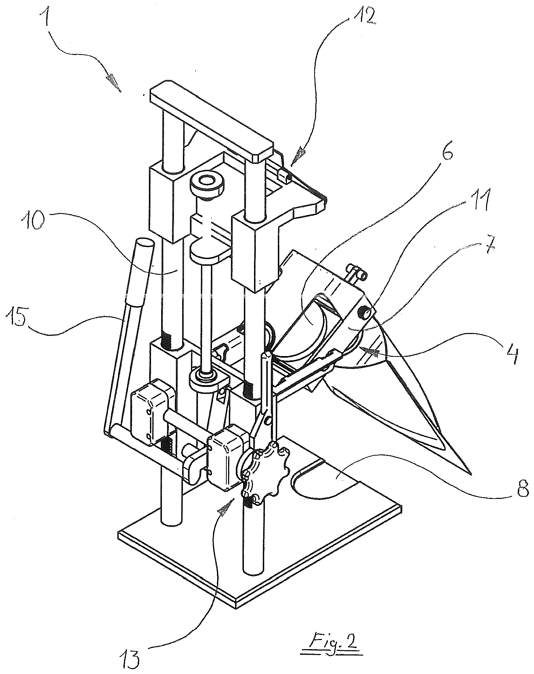

Die Figur 2 zeigt eine zweite perspektivische Ansicht der Vorrichtung gemäß Figur 1, jedoch in einer Ladestellung, in welcher die Standbodenbeutelhalterung 3 aus dem Ständerwerk 10 in eine Überkopflage umgeklappt ist. Weiterhin ist der Figur 2 zu entnehmen, dass die Portioniereinrichtung 1 einen Handhebel 15 zum manuellen Betätigen des Stellgliedes 6 aufweist. Gleiche Bauteile sind mit gleichen Bezugszahlen versehen.

## Patentansprüche

1. Vorrichtung zum Dosieren eines in Vorratspackungen abgepackten Lebensmittelpulvers, insbesondere eines Milchpulvers für Babynahrung, mit wenigstens einer Portioniereinrichtung wobei die Portioniereinrichtung (1) eine Standbodenbeutelhalterung (3) mit wenigstens einer darunter ausgebildeten Pulvereintrittsöffnung (4) und wenigstens einer versetzt zu der Pulvereintrittsöffnung (4) gelegenen Pulveraustrittsöffnung (5) aufweist, und dass die Portioniereinrichtung (1) ein Stellglied (6) mit wenigstens einer zwischen der Pulvereintrittsöffnung (4) und der Pulveraustrittsöffnung (5) stellbeweglich gehaltenen Pulverdosierkammer aufweist, und die Portioniereinrichtung (1) ein Ständerwerk (10) aufweist, in dem die Standbodenbeutelhalterung (3) auf einer Horizontalachse (11) klappbeweglich gehalten ist,
**dadurch gekennzeichnet,**
**dass** die Pulvereintrittsöffnung (4) in einer der Kupplungshälften einer ihr zugeordneten Beutelanschlusskupplung ausgebildet ist, dass die jeweils anderen Kupplungshälften der Beutelanschlusskupplung in den Standböden von Standbodenbeuteln (2) eingebaut sind, und dass die Standbodenbeutelhalterung (3) eine über der Pulvereintrittsöffnung (4) angeordnete Beutelaufhängung (12) aufweist.

2. Vorrichtung nach Anspruch 1, **dadurch gekennzeichnet, dass** das Stellglied (6) ein translatorisch geführter Schieber ist.

3. Vorrichtung nach Anspruch 1, **dadurch gekennzeichnet, dass** das Stellglied (6) ein rotatorisch geführter Radkörper ist.

4. Vorrichtung nach einem der Ansprüche 1 bis 3, **dadurch gekennzeichnet dass** die Portioniereinrichtung (1) einen zwischen der Pulveraustrittsöffnung (5) und einer Behälteraufnahme (8) herausnehmbar angeordneten Trichter (9) aufweist.

## Claims

1. Device for metering out a food powder, in particular milk powder for baby formula, packed in storage packages, comprising at least one portioning device (1), wherein the portioning device (1) has a stand-up pouch holder (3) with at least one powder inlet opening (4) designed underneath and at least one powder outlet opening (5) which lies offset to the powder inlet opening (4), and the portioning device (1) has an actuator (6) with at least one powder metering chamber displaceably held between the powder inlet opening (4) and the powder outlet opening (5), and the portioning device (1) has a framework (10) in which the stand-up pouch holder (3) is held to be pivotable at a horizontal axis (11),
**characterized in that**
the powder inlet opening (4) is designed in one of the coupling halves of a pouch connection coupling assigned to the powder inlet opening,
the respectively other coupling half of the pouch connection coupling is incorporated in the standing bases of the stand-up pouches (2), and
the stand-up pouch holder (3) has a pouch hanger (12) arranged over the powder inlet opening (4)

2. Device according to claim 1, **characterized in that** the actuator (6) is a translationally guided slider.

3. Device according to claim 1, **characterized in that** the actuator (6) is a rotatably guided wheel body.

4. Device according to any one of claims 1 to 3, **characterized in that** the portioning device (1) has a removable funnel (9) arranged between the powder outlet opening (5) and a container receptacle (8).

## Revendications

1. Dispositif, destiné à doser une poudre alimentaire emballée dans des emballages de réserve, notamment un lait en poudre pour l'alimentation des bébés, pourvu d'au moins un système de portionnement (1), le système de portionnement (1) comportant un système de maintien (3) de sachet autoporteur, muni d'au moins un orifice d'entrée de poudre (4) conçu sous ce dernier et d'au moins un orifice de sortie de poudre (5), situé en décalage par rapport à l'orifice d'entrée de poudre (4) et le système de portionnement (1) comportant un actionneur (6), comprenant au moins un compartiment doseur de poudre, maintenu en étant mobile en réglage entre l'orifice d'entrée de poudre (4) et l'orifice de sortie de poudre (5) et le système de portionnement (1) comportant une ossature (10) dans laquelle le système de maintien (3) de sachet autoporteur est maintenu en étant mobile en repliage sur un axe horizontal (11),
**caractérisé en ce que**
l'orifice d'entrée de poudre (4) est conçu dans l'une des moitiés d'accouplement d'un raccord d'accouplement de sachet qui lui est associé,
**en ce que** l'autre moitié d'accouplement respective du raccord d'accouplement de sachet est intégrée dans le fond autoporteur de sachets autoporteurs (2), et
**en ce que** le système de maintien (3) de sachet autoporteur comporte une suspension de sachet (12), placée au-dessus de l'orifice d'entrée de poudre (4).

2. Dispositif selon la revendication 1, **caractérisé en ce que** l'actionneur (6) est un curseur guidé en translation.

3. Dispositif selon la revendication 1, **caractérisé en ce que** l'actionneur (6) est un corps de roue guidé en rotation.

4. Dispositif selon l'une quelconque des revendications 1 à 3, **caractérisé en ce que** le système de portionnement (1) comporte un entonnoir (9) placé de manière amovible entre l'orifice de sortie de poudre (5) et un réceptacle de récipient (8).
